(19) Europäisches Patentamt
European Patent Office
Office européen des brevets

(11) Publication number: **0 009 822**
**B1**

(12) # EUROPEAN PATENT SPECIFICATION

(45) Date of publication of patent specification: **09.03.83**

(51) Int. Cl.³: **C 09 K 17/00, C 08 G 18/00**

(21) Application number: **79103871.4**

(22) Date of filing: **09.10.79**

(54) **Soil stabilizing composition.**

(30) Priority: **11.10.78 BE 191048**

(43) Date of publication of application:
**16.04.80 Bulletin 80/8**

(45) Publication of the grant of the patent:
**09.03.83 Bulletin 83/10**

(84) Designated Contracting States:
**AT DE FR GB IT LU NL SE**

(56) References cited:
**FR - A - 2 109 614**
**US - A - 4 114 382**
**US - A - 4 139 676**

**The file contains technical information submitted after the application was filed and not included in this specification**

(73) Proprietor: **"s.a. PRB N.V."**
**12, avenue de Broqueville**
**B-1150 Bruxelles (BE)**

(72) Inventor: **Creyf, Hubert S.**
**5 Leykendreef**
**B-8200 Brugge (BE)**

(74) Representative: **Pirson, Jean et al,**
**C/O Bureau GEVERS S.A. 7, rue de Livourne**
**B-1050 Brussels (BE)**

**EP 0 009 822 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

Soil stabilizing composition

The present invention concerns a soil stabilizing composition containing a polyurea polymer derived from the reaction in water of a polyol with an excess of polyisocyanate.

Various soil stabilizing products are already on the market.

These products are used either as a solution or an emulsion.

However, many of these soil stabilizers present disadvantageous side properties, such as phytotoxicity and lack of biodegradability.

The use of soil stabilizers is difficult in practice. This is for example the case with the soil stabilizers known from the British patent 1,322,490.

This British patent relates to soil stabilizing compositions based on urethane prepolymers represented by following formula:

$$O{=}C{=}N{-}R_1{-}N{=}C{=}O$$

wherein $R_1$ is a polyalkylene oxide chain with a minimum of 70% of ethylene oxide.

In the presence of water, the prepolymer is transformed into a polyurea polymer resulting from the following reactions:

$$O{=}C{=}N{-}R_1{-}N{=}C{=}O + 2\,H_2O \rightarrow$$

$$HO{-}\underset{\underset{O}{\|}}{C}{-}NH{-}R_1{-}NH{-}\underset{\underset{O}{\|}}{C}{-}OH \rightarrow$$

$$H_2N{-}R_1{-}NH_2 + 2\,CO_2$$

$$(n + 1)\ H_2N{-}R_1{-}NH_2 + n\ OCN{-}R_1{-}NCO \rightarrow$$

$$H_2N{-}\left[R_1{-}\underset{H}{\underset{|}{N}}{-}\underset{O}{\underset{\|}{C}}{-}\underset{H}{\underset{|}{N}}\right]_{2n} RNH_2$$

Prepolymers of this type present a hydrophilic character which ensure their solubility in water, with the result, however, that when diluted with water, the formed polymers gel after a few minutes. As such agar-like gels are no longer usable in practice, in order to be able to apply such stabilizing compositions to soils, it is necessary to use a sophisticated two-component equipment delivering accurate prepolymer and water quantities mixing them and spreading immediately them on the soil.

Another drawback of these known prepolymers, with a high ethylene oxide content, is their fairly high solidification point, so that it is necessary, in most cases, to use diluting agents in order to maintain the prepolymer in a liquid state at normal temperatures of use.

A further drawback of such gelled polyurea polymers is their low adhesion properties, which do not facilitate the build-up of aggregates of the soil particles to be stabilized.

US patent 4,112,382 relates to a method for consolidating geological formations using a polyurethan foam building composition injected under pressure into the soil.

This composition is obtained by combining a polyol and an isocyanate so that a polyurethan is formed in the soil. No prepolymer has been formed and no water has been added.

Such a foam composition cannot be spread on the ground and does not penetrate sufficiently therein without pressure.

The present invention has for its object to provide a soil stabilizing composition eliminating these various drawbacks.

The soil stabilizing composition according to the invention is characterized in that it contains, in water, a dispersed polyurea polymer, the polyol component of which consists of one or more polyols with hydrophobic and hydrophilic groups in a weight ratio between 30/70 and 90/10 and with an average molecular weight of 1500 to 6000, and an anionic or nonionic surface active agent or a mixture thereof of 0,01 to 20% by weight of the polymer.

The soil stabilizing composition, according to the invention, is produced starting from a urethane prepolymer of reduced hydrophilic character, so that, when reacting with water to form a polyurea polymer, not a gel but a precipitate will be formed. In order to provide a stabilized composition which can be spread in a simple manner on the soil in fairly diluted condition, this stabilizing composition comprises furthermore suitable surface-active products in order to maintain the polyurea polymer particles in dispersion, allowing the quantity of water required to be added thereto without danger of a precipitate being formed.

The lower hydrophilic character of the involved soil stabilizing composition is determined by the

fairly high content of hydrophobic groups in the polyol component, which provides the said prepolymer by reacting with a stoichiometric excess of polyisocyanate.

This polyol component is made up of one or more polyols having a weight ratio between the total amount of hydrophobic groups and the total amount of hydrophilic groups in the total quantity of the polyol component of between 30/70 and 90/10.

The hydrophilic character of the polyol component is mainly determined by the ethylene oxide groups present, while the hydrophobic character is determined e.g. by the propylene oxide groups present.

The weight ratio of polypropylene oxide/polyethylene oxide in the polyol component is thus comprised between 30/70 and 90/10. (The total content of polypropylene oxide in the polyol is thus between 30 and 90% of the total quantity of polyol).

A preference is however given to a ratio between 50/50 and 80/20. (an amount between 50 and 80% by weight of the total amount of polyol).

Furthermore, the total molecular weight of the polyol should be comprised between 1500 and 6000, and preferably between 2000 and 4000.

In some specific cases, the polyol component can be made up of at least two different polyols one of them having a molecular weight between 60 and 2000, preferably between 500 and 1500, the total molecular weight should however always be within the above mentioned limits.

Furthermore, the amount of teminal free isocyanate groups is 1 to 10% by weight and preferably 2 to 6% by weight of the prepolymer.

According to the kind of the product the quantity of surface-active product contained in the soil stabilizing composition varies between 0,01 and 20% by weight of the polymer amount.

For preparing the soil stabilizing composition according to the invention, a polyurethane prepolymer is formed by reacting a polyalkylene oxide with a stoichiometric excess of polyisocyanate. Aliphatic or aromatic isocyanates can be used for this purpose, provided they comprise at least two isocyanate groups. Besides others, the following polyisocyanates can be used: hexamethylene diisocyanate, isophorone diisocyanate, naphtalene diisocyanate, triphenylmethane diisocyanate, mixtures of isomers of toluene diisocyanate and diphenylmethane diisocyanate.

It is of sourse possible to use also mixtures of these polyisocyanates.

The polyalkylene oxide preferably comprises at least two terminal hydroxy groups. The average molecular weight is, as already mentioned above, between 1500 and 6000, a preference being however given to a molecular weight between 2000 and 4000. The polyalkylene oxide comprises a difunctional or polyfunctional initiator, for example water, ethylene glycol, dipropylene glycol, trimethylpropane, quadrol of ethylene-diamine, whereby hydrophilic groups, more particularly ethylene oxide groups and hydrophobic groups, for example propylene oxide groups, are copolymerised. The sequence of this polymerisation is a random or block polymerisation, preferably a random one.

Optionally a second polyalkylene oxide is added, the molecular weight of which is between 60 and 2000, preferably between 500 and 1500. This second polyalkylene oxide must also be difunctional or polyfunctional. Evidently more than two polyols can be used in order to react with a polyisocyanate.

It is important that the weight ratio of the total amount of hydrophobic groups, for example propylene oxide, butylene oxide, styrene oxide, epichlorhydrin, and the total amount of hydrophilic groups, as ethylene oxide, should for the total quantity of the polyol component be between 30/70 and 90/10. If two polyols are used, the second polyol of polyalkylene oxide can for example be deprived of hydrophobic groups on condition that the first polyol comprises enough groups of this kind in order to meet the above-mentioned conditions.

The weight ratio of the polyalkylene oxide/polyisocyanate is selected so that, after complete reaction, an excess of 1 to 10%, preferably between 2 to 6%, by weight of free isocyanate groups with respect to the prepolymer remains unreacted. The preparation of the prepolymer is based on the traditionally known method, namely: the polyisocyanate is added with slow stirring to the polyol or the polyol mixture, kept at a temperature above its melting temperature. The mixture is heated for a few hours to temperatures between 80° and 185°. The reaction can be accelerated by adding catalysts of the amine kind and can also be negatively catalysed by means of known additives, such as benzoyl chloride. In the latter case, the reaction period and the reaction temperature have to be adjusted.

If required, an amount of solvent or diluent is added to the prepolymer, which has no substantial active hydrogen content.

After preparing the prepolymer in this way according to traditional methods, 0,01 to 20% by weight of surface-active product is added thereto. This surface-active product must be as much as possible water-free and preferably soluble in the prepolymer. As surface-active product, use may be made of all non-ionic and anionic types or mixtures thereof. In particular, surface-active products of following type are suitable:

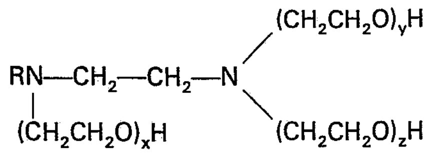

(I)

wherein x + y + z = 3
or of the type:

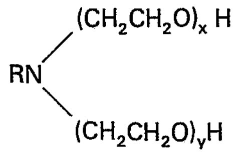

(II)

wherein R is an alkyl group with 12 to 16 carbon atoms and x + y = 11; the average molecular weight being of the order of 700.

According to the invention the surface-active products of the anionic type having following formulae are particularly interesting:

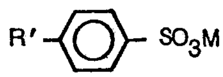

(III)

wherein R′ is an alkyl group of 9 to 13 carbon atoms

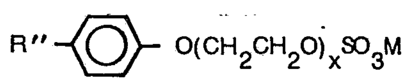

(IV)

wherein R″ is an alkyl group having 8 to 12 carbon atoms, and x = 3, 7 or 11. In these formulae (III) and (IV), M represents triethanolamine, a metal ion, such as $Na^+$ or $Ca^{++}$.

The mixture of prepolymer and surface-active product, optionally with solvent, can be mixed in situ with water in a weight ratio between 1/100 and 1/5, preferably between 1/50 and 1/10 of the water content. Distilled water as well as ordinary tap-water may be used. By addition of water a milk-like dispersion results which remains stable for at least a week under normal conditions.

Comparative example

One starts from 500 gr of a diol of a molecular weight of 5000, having two terminal OH groups, this diol being comprised of an initiator such as ethylene glycol, wherein 25% by weight of propylene oxide and 75% by weight of ethylene oxide are randomly copolymerised. This diol is mixed at 50°C with 100 gr of a second diol with a functionality of 2 and of a molecular weight of 600, this diol also comprising 25% by weight of propylene oxide and 75% by weight of ethylene oxide which have been randomly copolymerised.

To the mixture of diols, 182.6 gr of 2.4-toluene diisocyanate (T80) are added. The temperature is raised to 90°C. The reaction of the diols with the isocyanate is carried out under mild conditions. After 2 hours, the temperature is reduced to 70°C and 150 gr of 2-butanone are added.

After suitable mixing a prepolymer having a free isocyanate (NCO) content of about 6.5% by weight is obtained.

If the prepolymer thus obtained, having been prepared from a mixture of polyols comprising a weight ratio ethylene oxide/propylene oxide of 75/25, is mixed with water in a ratio of 6 gr of prepolymer to 100 gr of water, a gel occurs after a few minutes but no stable dispersion.

Example I

To 600 gr of polyol of a functionality of 2 and of a molecular weight of 3000, and containing an initiator, whereby 80% by weight of propylene oxide and 20% by weight of ethylene oxide are randomly copolymerised, 60 gr of a second polyol are added, this polyol being of a functionality of 2 but of a molecular weight of 1000 and containing 30% by weight of propylene oxide and 70% by weight of ethylene oxide, again randomly copolymerised. The total mixture of the two polyols comprises about 75,5% of propylene oxide. To these polyols, 127,6 gr of hexamethylene diisocyanate are added and then the mixture is heated at 120°C for 2,5 hours.

Subsequently the temperature is cooled down to 50°C and 85 gr of 1.1.1-trichloroethane are added. After mixing, the product is cooled to room temperature. The percentage of free isocyanate groups is about 4,5% by weight.

The prepolymer, formed from polyols, which comprise on the whole 75% by weight of propylene oxide, obtained in this manner, is mixed with calcium aryl alkyl sulfonate as surface-active product, in a

ratio of 8 gr of sulfonate to each 100 gr of the prepolymer, and afterwards 7 gr of this mixture are mixed with 100 gr of water, a white dispersion having a blue Tyndall effect is obtained, which is stable for more than one week.

Example II

One starts from three polyols of a functionality of 2. The first polyol has a molecular weight of 4000 and comprises an initiator whereby 95% by weight of propylene oxide and 5% by weight of ethylene oxide are copolymerised. The second polyol has a molecular weight of 2000 and comprises 80% by weight of propylene oxide and 20% by weight of ethylene oxide in its chain, while the third polyol has a molecular weight of 1000 and comprises about 50% by weight of propylene oxide and 50% by weight of ethylene oxide in its chain.

450 gr, 105 gr and 45 gr respectively of these polyols are mixed at 50°C. The mixture comprises about 89% by weight of propylene oxide.

To this mixture, 178,7 gr of toluene diisocyanate (T80) are added and then the temperature of the mixture is heated at 95°C for about 2,5 hours. Then, 80 gr of glycerine triacetate are added and the mixture is then allowed to cool to room temperature. The content of free isocyanate groups is about 7,5% by weight.

With the so prepared prepolymer, obtained from polyols comprising 89% by weight of propylene oxide, a surface-active product is mixed in a ratio of 7 gr of surface-active product of the kind of formula (II) wherein R is an alkyl group of 14 carbon atoms to 100 gr of prepolymer and if 5 gr of this mixture are mixed with 100 gr of water, then a dispersion results, which however on resting settles as a small fluffy precipitate.

The importance of the weight ratio of propylene oxide groups, ethylene oxide groups in the polyols used for preparing the prepolymer thus appears to be essential.

Concerning the ratio, the prepolymers according to example II is a limit case while the ratio used when preparing the prepolymer according to example I allows a very long stability of the dispersion to be obtained.

The stability of the dispersion without precipitate or gel formation is important for soil stabilisation. The prepolymer comprising a surface-active product is mixed in situ with water, so as to obtain a dispersion of polyurea polymer. This dispersion is diluted with water and can remain stable for at least one week.

Using a simple device, the dispersion can be spread on the soil to be stabilized, whereby after the water shall have evaporated, a stable aggregate formation will be noted. The polymer so formed is not phytotoxic and well biodegradable.

It becomes apparent from the above that the main object of the invention is to provide a soil stabilizing composition comprised of a prepolymer based on a polyol presenting a suitable balance of hydrophilic and hydrophobic alkylene oxide groups, the hydrophobic character of which is such that the formed polyurea polymer is insoluble in water, while the hydrophilic character is sufficient to maintain the insoluble polyurea polymer in dispersion by means of a surface active product.

According to the invention, it has been ascertained that by a suitable selection of the relative amount of hydrophobic groups in the polyol, it is possible to provide a soil stabilizing composition, the water-formed polyurea polymer of which forms a dispersion of polyurea polymer particles, rather than an actual solution and which is water repellent enough to form a precipitate instead of a gel, whereby however, due to the presence of a surface active product, the formation of this precipitate can be sufficiently delayed to allow this water dispersion to be spread over the soil to be stabilized by means of a simple device.

The hydrophobic groups of the polyol must not necessarily be propylene oxide but can also be other hydrophobic groups, for example butylene oxide, styrene oxide, epichlorohydrin.

## Claims

1. Soil stabilizing composition containing, in water, a polyurea polymer derived from the reaction of a polyol with an excess of polyisocyanate, characterized in that it contains, in water, a dispersed polyurea polymer, the polyol component of which consists of one or more polyols with hydrophobic and hydrophilic groups in a weight ratio between 30/70 and 90/10 and with an average molecular weight of 1500 to 6000, and an anionic or nonionic surface active product or a mixture thereof of 0,01 to 20% by weight of the polymer.

2. Soil stabilizing composition according to claim 1, characterized in that the polyurea polymer content is, in a weight ratio, between 1/100 and 1/5, preferably between 1/50 and 1/10 of the water content.

3. Soil stabilizing composition according to either one of claims 1 and 2, characterized in that the surface active product is a) a compound of formula (I)

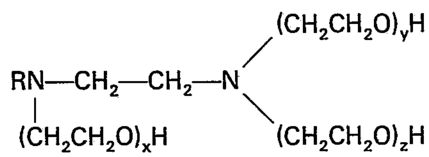

with x + y + z = 3, or a compound of formula (II)

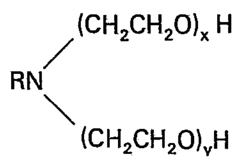

with x + y = 11

wherein R is an alkyl group with 12 to 16 carbon atoms, the average molecular weight being of the order of 700, or
b) an alkyl aryl sulfonate according to one of the following formulas:

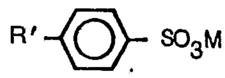
(III)

wherein R′ is an alkyl group of 9 to 13 carbon atoms or

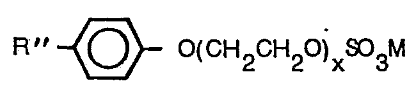
(IV)

wherein R″ is an alkyl group having 8 to 12 carbon atoms and x = 3, 7 or 11, M being a triethanolamino group, or a metal ion, usch as $Na^+$ or $Ca^{++}$.

4. Soil stabilizing composition according to any one of claims 1 to 3, characterized in that the polyol consists of ethylene oxide and propylene oxide groups as the hydrophilic and hydrophobic groups respectively.

5. Soil stabilizing composition according to claim 4, characterized in that the polyol is a polyalkylene oxide which consists of polypropylene oxide and polyethylene oxide in a weight ratio between 50/50 and 80/20.

6. Soil stabilizing composition according to any one of claims 1 to 5, characterized in that the polyol consists of at least two different polyols one of which has a molecular weight of 1500 to 6000 while the other has a molecular weight of 60 to 2000, the average molecular weight being between 1500 to 6000.

**Revendications**

1. Composition de stabilisante du sol contenant, dans de l'eau un polymère de polyurée dérivant de la réaction de polyol avec un excès de polyisocyanate, caractérisé en ce qu'il comprend un polymère de polyurée dispersé dans de l'eau, un composant polyol de celui-ci formé d'un ou de plusieurs polyols ayant des groupes hydrofobes et hydrophiles dans un rapport en poids entre 30/70 et 90/10 et avec un poids moléculaire moyen de 1500 à 6000, et un agent tensioactif anionique ou nonionique ou un mélange de ceux-ci de 0,01 à 20% en poids du polymère.

2. Composition de stabilisante du sol suivant la revendication 1, caractérisé en ce que la teneur en polymère de polyurée est, dans un rapport en poids, compris entre 1/100 et 1/5, de préférence entre 1/50 et 1/10 de la teneur en eau.

3. Composition stabilisante du sol suivant l'une ou l'autre des revendications 1 ou 2, caractérisé en ce que l'agent tensioactif est choisi dans le groupe formé:
a) d'un composé de formule (I)

a) 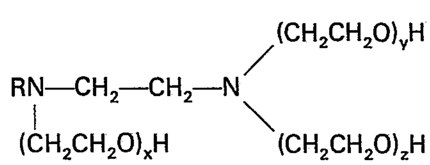

avec x + y + z = 3 ou d'un composé de formule (II)

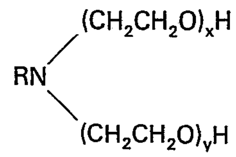

avec $x + y = 11$

dans lesquels R est un groupe alkyle contenant 12 à 16 atomes de carbone, le poids moléculaire moyen étant de l'ordre de 700, ou,
b) d'un sulfonate aryle-alkyle suivant l'une des formules suivantes:

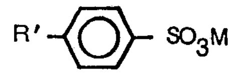 (III)

dans laquelle R′ est un groupe alkyle contenant de 9 à 13 atomes de carbone, ou

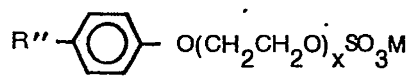 (IV)

dans laquelle R″ est un groupe alkyle ayant entre 8 et 12 atomes de carbone et $x = 3$, 7 ou 11, m étant un groupe triéthanolamino ou un ion métallique tel que $Na^+$ ou $Ca^{++}$.

4. Composition stabilisante du sol suivant l'une quelconque des revendications 1 à 3, caractérisée en ce que le polyol est constitué de groupes d'oxyde d'éthylène et d'oxyde de propylène, comme groupes hydrophile et hydrophobique, respectivement.

5. Composition stabilisante du sol suivant la revendication 4, caractérisée en ce que le polyol est un oxyde de polyalkylène qui est constitué d'un oxyde de polypropylène et d'un oxyde de polyéthylène dans un rapport en poids entre 50/50 et 80/20.

6. Composition stabilisante du sol suivant l'une quelconque des revendications 1 à 5, caractérisée en ce que le polyoyl est constitué d'au moins deux polyols différents dont l'un a un poids moléculaire entre 1500 et 6000 et l'autre un poids moléculaire entre 60 et 2000, le poids moléculaire moyen étant compris entre 1500 et 6000.

## Patentansprüche

1. Bodenstabilisierungs-Zusammensetzung, welche in Wasser ein Polyharnstoff-Polymer, welches aus der Umsetzung eines Polyols mit einem Überschuß an Polyisocyanat stammt, enthält, dadurch gekennzeichnet, daß sie in Wasser ein dispergiertes Polyharnstoff-Polymer, dessen Polyol-Komponente aus einem oder mehreren Polyolen mit hydrophoben und hydrophilen Gruppen in einem Gewichtsverhältnis zwischen 30/70 und 90/10 besteht und mit einem durchschnittlichen Molekulargewicht von 1500 bis 6000, und ein anionisches oder nichtionisches oberflächenaktives Produkt oder ein Gemisch davon in 0,01 bis 20 Gew.-% des Polymeren enthält.

2. Bodenstabilisierungs-Zusammensetzung nach Anspruch 1, dadurch gekennzeichnet, daß der Gehalt an Polyharnstoff-Polymer in einem Gewichtsverhältnis zwischen 1/100 und 1/5, vorzugsweise zwischen 1/50 und 1/10 des Wasser-Gehaltes liegt.

3. Bodenstabilisierungs-Zusammensetzung nach einem der Ansprüche 1 und 2, dadurch gekennzeichnet, daß das oberflächenaktive Produkt ausgewählt ist aus der Gruppe von:
a) einer Verbindung der Formel I

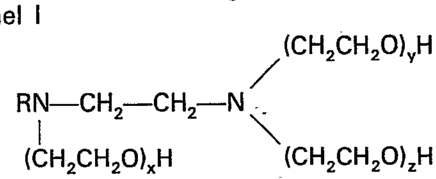 (I)

mit $x + y + z = 3$
oder einer Verbindung der Formel II

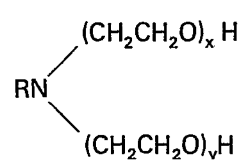

mit $x + y = 11$

worin R einen Alkylrest mit 12 bis 16 Kohlenstoffatomen bedeutet, und das mittlere Molekulargewicht in der Größe von 700 liegt, oder
b) einem Alkylarylsulfonat nach einer der folgenden Formeln (III)

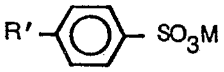

(III)

in der R′ einen Alkylrest mit 9 bis 13 Kohlenstoffatomen darstellt, oder nach Formel IV

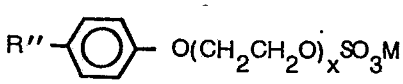

(IV)

in der R″ einen Alkylrest mit 8 bis 12 Kohlenstoffatomen bedeutet und x = 3, 7 oder 11 gilt, und M eine Triethanolaminogruppe oder ein Metallion, wie $Na^+$ oder $Ca^{++}$, ist.

4. Bodenstabilisierungs-Zusammensetzung nach einem der Ansprüche 1 bis 3, dadurch gekennzeichnet, daß das Polyol aus Ethylenoxid- und Propylenoxidgruppen als den hydrophilen bzw. Hydrophoben Gruppen besteht.

5. Bodenstabilisierungs-Zusammensetzung nach Anspruch 4, dadurch gekennzeichnet, daß das Polyol ein Polyalkylenoxid ist, welches aus Polypropylenoxid und Polyethylenoxid in einem Gewichtsverhältnis zwischen 50/50 und 80/20 besteht.

6. Bodenstabilisierungs-Zusammensetzung nach einem der Ansprüche 1 bis 5, dadurch gekennzeichnet, daß das Polyol mindestens aus zwei unterschiedlichen Polyolen besteht, wovon eines ein Molekulargewicht von 1500 bis 6000 aufweist, während das andere ein Molekulargewicht von 60 bis 2000 besitzt, wobei das mittlere Molekulargewicht zwischen 1500 bis 6000 liegt.